Europäisches Patentamt

European Patent Office

Office européen des brevets

(19)

(11) Numéro de publication : **0 555 128 A1**

(12) # DEMANDE DE BREVET EUROPEEN

(21) Numéro de dépôt : **93400222.1**

(22) Date de dépôt : **28.01.93**

(51) Int. Cl.⁵ : **C22B 3/00,** C22B 3/12, C22B 3/24, C22B 3/26, B01D 11/02, B01J 23/92, // C22B34/34, C22B34/22

(30) Priorité : **07.02.92 FR 9201488**

(43) Date de publication de la demande : **11.08.93 Bulletin 93/32**

(84) Etats contractants désignés : **AT BE CH DE ES GB IT LI LU NL**

(71) Demandeur : **EURECAT EUROPEENNE DE RETRAITEMENT DE CATALYSEURS Quai Jean Jaurès B.P. 45 F-07800 La Voulte-sur-Rhône (FR)**

(72) Inventeur : **Ackermann, François 15, Quai du Pont, Beauchastel F-07800 La Voulte sur Rhone (FR)**

Inventeur : **Berrebi, Georges 17,rue Barnave F-26500 Bourg les Valences (FR)**
Inventeur : **Dufresne, Pierre 26, rue Florian F-26000 Valence (FR)**
Inventeur : **Van Lierde, A. 44, avenue J. Jongen B-1180 Bruxelles (BE)**
Inventeur : **Foguenne, Marc 11, rue de la Boverie B-4800 Jehanster (BE)**

(74) Mandataire : **Andreeff, François INSTITUT FRANCAIS DU PETROLE 4, avenue de Bois-Préau F-92502 Rueil-Malmaison (FR)**

(54) **Récupération de molybdène et de vanadium à partir de catalyseurs uses.**

(57)    L'invention concerne la récupération dans des catalyseurs usés, de molybdène et de vanadium à l'état sensiblement pur.

Elle est caractérisée par une succession d'étapes comportant notamment une lixiviation des molybdate et vanadate, une adsorption sur résine échangeuse d'ions et à une élution sélective pour récupérer séparément le molybdène et le vanadium.

EP 0 555 128 A1

Jouve, 18, rue Saint-Denis, 75001 PARIS

La présente invention concerne la récupération de molybdène et de vanadium à partir de catalyseurs usés.

Engagée depuis plus de dix ans dans le retraitement de catalyseurs utilisés dans le raffinage du pétrole, la demanderesse a développé une technique permettant de traiter les catalyseurs usés de type hydrotraitement, hydrocraquage ou hydrogénation en vue de récupérer les métaux du catalyseur.

Cette technique permet de recycler en totalité les métaux valorisables tels que le molybdène, le vanadium, le tungstène, le cobalt et le nickel, tout en éliminant les sous produits contenus dans ces catalyseurs (arsenic, antimoine, plomb, silice, phosphore, fer, aluminium, etc) par des techniques compatibles avec les contraintes réglementaires relatives à l'environnement.

La dite technique est une combinaison d'étapes pyrométallurgiques et hydrométallurgiques dont les principales caractéristiques sont l'utilisation des techniques de grillage déjà opérationnelles pour la régénération des catalyseurs. Le grillage du catalyseur usé s'effectue à température modérée avec recyclage des calories dégagées par la combustion du soufre et du carbone contenus dans le catalyseur traité.

Dans cette technique, le catalyseur usé est préalablement criblé afin d'éliminer tous les matériaux étrangers telles que les billes inertes. Le catalyseur est ensuite dirigé vers une unité de régénération de façon à éliminer en totalité les hydrocarbures, le soufre et le carbone par combustion.

La régénération s'effectue dans un four à des températures supérieures à 500 °C et dans un grand excès d'air. Les effluents gazeux sont envoyés dans une chambre de postcombustion et brûlés à des températures supérieures à 850 °C puis sont dirigés vers les installations de traitement classique : laveurs, cyclones, filtres...

Après régénération, le catalyseur contient moins de 0,1 % de carbone et de soufre.

A ce stade, diverses méthodes ont été proposées en vue de récupérer plus particulièrement le molybdène et éventuellement le vanadium. On a proposé notamment des méthodes par lixiviation en milieu basique mais de telles méthodes ne suffisent pas pour obtenir du molybdène pur et/ou du vanadium également à l'état pur.

Une méthode de l'art antérieur consiste à soumettre le catalyseur à une simple lixiviation à la soude. La méthode est imparfaite car le molybdène récupéré est impur du fait de l'extraction parasite simultanée de vanadium et de l'alumine (qui constitue le support de catalyseur).

Une autre méthode de l'art antérieur consiste à procéder à un grillage en milieu alcalin (soude par exemple) du catalyseur usé vers 750 °C par exemple dans un four. On récupère à ce stade de l'alumine, du molybdène et la soude ; puis on procède à une lixiviation à l'eau (percolation) permettant de lixivier (dissoudre) les molybdate, les vanadate, les phosphate et arseniate de sodium. A ce stade, l'alumine est peu dissoute. Le résidu à base des métaux nickel et/ou cobalt et d'alumine peuvent être vendus tels quels ou traités en vue d'extraire le nickel et/ou le cobalt (par exemple par pyrométallurgie).

Un traitement final de la solution à pH neutre permet d'éliminer par précipitation l'aluminium et l'arsenic et d'obtenir des quantités importantes du molybdate de soude mais ce molybdate est toujours contaminé par du vanadium.

La technique proposée dans la présente invention par la demanderesse s'avère la plus efficace au niveau des rendements d'extraction du molybdène et du vanadium. Au cours de la lixiviation particulière de l'invention (milieu alcalin, température de l'ordre de 90 °C, plus généralement entre 50 et 100 °C, la dite lixiviation s'effectue par exemple en continu et à contre-courant dans une série d'au moins deux bacs, par exemple de trois à douze bacs ou davantage, par percolation.

La présente invention concerne la récupération de molybdène et de vanadium dans un catalyseur usé et plus particulièrement un procédé de récupération à l'état sensiblement pur du molybdène ainsi que du vanadium sensiblement pur lorsque ce dernier métal est présent dans le catalyseur usé.

L'invention s'intègre donc dans les étapes des procédés de l'art antérieur concernant la récupération des autres ingrédients des catalyseurs usés, tels que le cobalt et/ou le nickel, éventuellement le tungstène et/ou l'arsenic, etc.

Le procédé, selon l'invention, intégré dans ou à la suite du grillage du catalyseur, se distingue des autres procédés existants par sa souplesse, sa facilité de mise en oeuvre, sa simplicité, son faible investissement et un coût de production des métaux relativement compétitif.

D'autres procédés qui existent actuellement font appel en général à :
- des techniques de grillage haute température suivies de lixiviation acide. Ces procédés sont en général coûteux en énergie et l'investissement est relativement lourd compte tenu des problèmes de corrosion acide ;
- des techniques de lixiviation haute pression en milieu fortement alcalin (autoclavage). L'inconvénient du procédé réside dans la nécessité de dissoudre entièrement l'alumine et/ou la silice qui constitue le support du catalyseur.

L'originalité du procédé selon l'invention réside dans la combinaison judicieuse des techniques de grillage, de pyrométallurgie et d'hydrométallurgie.

Aussi, la première étape de grillage du catalyseur usé est fondamentale dans la suite du traitement. Cette étape est parfaitement maîtrisée puisqu'elle fait appel aux techniques désormais éprouvées de régénération en four tournant, et est une spécialité de la demanderesse.

En outre, ces techniques ont l'avantage de pouvoir être utilisées directement dans des installations existantes et avec des procédés spécifiques ayant déjà été testés et fiabilisés.

Dans le procédé selon l'invention, le vanadium et le molybdène sont récupérés à l'état pur avec des rendements supérieurs à 90 %.

Dans la présente invention, en vue d'obtention du molybdène sensiblement pur et éventuellement de vanadium sensiblement pur, à partir d'un catalyseur usé, souillé ou pollué, on procède à la récupération des dits métaux molybdène et vanadium de la façon suivante, à l'issue ou au cours des purifications diverses habituelles de récupération des autres ingrédients du dit catalyseur (purifications rappelées ci-dessus) :

a) on soumet la masse catalytique à une lixiviation alcaline. Généralement, on lave ensuite la masse à l'eau. Au cours de la lixiviation proprement dite, les molybdate, vanadate, phosphate, arséniate, etc... sont lixiviés c'est-à-dire sont dissous. L'alumine est peu dissoute. A ce stade, le résidu contenant le nickel et/ou le cobalt et le support alumine ou silice-alumine peut être traité séparément en vue d'extraire en particulier le nickel et/ou le cobalt. Les paramètres de la lixiviation (pH, potentiel rédox, temps de séjour, débits, concentrations, rapport liquide/solide, etc) sont ajustés en fonction du catalyseur de façon à éviter une trop importante dissolution de l'alumine.

b) La solution obtenue est amenée à pH d'environ 7 par ajout d'acide (de préférence l'acide sulfurique) en vue d'éliminer (par précipitation) l'alumine ainsi que éventuellement le phosphore et l'arsenic que peut contenir le catalyseur, puis la présente invention se caractérise alors en ce que :

c) on porte la solution purifiée qui contient du molybdène et éventuellement du vanadium à pH d'environ 4 à 5,5 et

d) on procède à une adsorption de cette solution sur une résine échangeuse d'ions, à un pH stabilisé d'environ 4,

e) on procède à une élution pour recueillir le molybdène à l'état sensiblement pur.

Si le catalyseur renferme à la fois du molybdène et du vanadium, on procède au cours de l'étape (e) à une élution sélective en deux étapes. Au cours de la première étape, on effectue une élution en milieu acide et réducteur en vue de récupérer du vanadium sensiblement pur et au cours de la deuxième étape de l'élution, effectuée en milieu basique (par emploi de préférence d'ammoniaque ou de soude), on récupère du molybdène sensiblement pur.

Le tableau I donne une idée du type d'analyses et d'impuretés contenues dans des catalyseurs usés.

Table I

| Analyses types de catalyseurs usés d'hydrotraitement de coupes pétrolières | | |
|---|---|---|
| | CATALYSEUR D'HYDRODESULFURA-TION | CATALYSEUR D'HYDRODEMETALLATION |
| Al (% pds) : | 35 | 28 |
| Mo (% pds) : | 8,8 | 6,2 |
| V (% pds) : | 1,2 | 10,5 |
| Ni (% pds) : | 0,3 | 3,1 |
| Co (% pds) : | 3,2 | 2,1 |
| W (% pds) : | 0,1 | 0,1 |
| Pb (% pds) : | 0,01 | 0,1 |
| Si (% pds) : | 0,5 | 1,2 |
| Fe (% pds) : | 0,2 | 0,7 |
| As (% pds) : | 0,01 | 0,4 |
| P (% pds) : | 0,03 | 0,05 |
| Na (% pds) : | 0,2 | 0,5 |

EXEMPLE

Exemple 1 :

Cet exemple illustre les étapes (a) (lixiviation) et (b) (traitement à l'acide avec élimination de l'aluminium).

PARAMETRES DE LA LIXIVIATION

Catalyseur :

type : catalyseur d'hydrotraitement du tableau I ci-dessus
masse : 200 g

Solution d'attaque :

type : NaOH
concentration : 60 g/l
volume : 150 ml

Conditions opératoires :

temps : 3 heures
température : 90 ° C

TABLEAU DES RESULTATS (limités ici à Mo, V, Al)

|  | résidu | solution |
|---|---|---|
| masse ou volume | 174,2 g | 280 ml |
| pH | - | 10,9 |
| Teneur Mo | 1,59 % | 39,6 g/l |
| Teneur V | 0,59 % | 4,3 g/l |
| Teneur Al | 40,71 % | 5,2 g/l |
| Teneur NaOH libre | - | 13,6 g/l |

Rendements de lixiviation :

- Mo : 85,7 %
- V : 65,3 %
- Al : 3,0%

PARAMETRES DE LA PRECIPITATION EN MILIEU ACIDE

Température d'essai :

-90 °C

Solution de base :

- volume : 100 ml
- pH : 11,80

Solution d'$H_2SO_4$ :

- concentration : 100 g/l
- volume ajouté : 13, 7 ml

Evolution du pH :

- de 11,8 à 7,00

Solution purifiée :

- volume : 114 ml
- pH : 6,6

Précipité :

- masse : 2,0 g

## TABLEAU DES RESULTATS

|  | teneurs (g/l) | | | teneur (mg/l) |
|---|---|---|---|---|
|  | Mo | V | Al | As |
| Solution de lixiviation | 31,35 | 3,40 | 4,13 | 27,3 |
| Solution après purification | 25,29 | 2,14 | <0,05 | 0,8 |

## RENDEMENTS DE PRECIPITATION

Mo : 8,19 % ; Al : > 98,6 %
V : 28,2 % ; As : 96,7 %

## Exemple 2 :

Cet exemple illustre les étapes (c) et (d) (adsorption d'une solution, telle que celle obtenue à l'exemple 1, sur une résine échangeuse d'ions).

## PARAMETRES DE L'ECHANGE IONIQUE

Résine :

- dénomination : Amberlite IRA 94 S
- type : échangeur d'anions faiblement basique
- volume : 20 ml
- conditionnement : $H_2SO_4$ 60 g/l pendant 1 heure

Solution de base :

- solution de lixiviation
- volume : 75 ml
- pH : 5,00

Paramètres opératoires :

- température : 18 °C
- durée : 1 heure

Solution purifiée :

- volume : 75 ml
- pH : 4,12

## TABLEAU DES RESULTATS

|  | teneurs (g/l) | | | | | | teneur (mg/l) |
|---|---|---|---|---|---|---|---|
|  | Mo | V | Al | Si | Ni | S* | As |
| Solution de base | 14,69 | 1,77 | 0,75 | <0,02 | <0,005 | 11,2 | 2,0 |
| Solution après adsorption | 1,64 | <0,05 | 0,23 | <0,02 | <0,005 | 10,7 | <0,05 |

RENDEMENTS D'ECHANGE IONIQUE

      Mo : 88,8 % Al : 69,3 % S* : 4,5 % V : > 97,2 % As : > 97,5 %

      * Ce soufre est sous forme de sulfate.

Exemple 3 :

      Cet exemple illustre l'étape (d) du procédé (adapté ici à l'imprégnation du molybdène et du vanadium sur trois colonnes en série) puis l'étape (e) d'élution sélective.

ADSORPTION SUR TROIS COLONNES EN SERIE

Résine :

- dénomination : Amberlite IRA 94 SP
- volume : 200 ml
- alimentation : bas → haut
- trois colonnes en série
- conditionnement : $H_2SO_4$ 60 g/l pendant 1 h

Solution à adsorber :

- solution acidifiée par H2SO4
- concentrations : 48 g/l Mo et 3.90 g/l V
- débit : 400 ml/h
- pH : 4

Paramètres opératoires :

      - température : 45 °C

TABLEAU DES RESULTATS

| Temps (heures) | concentrations à la sortie des colonnes (g/l) | | | | | |
| | Colonne 1 | | Colonne 2 | | Colonne 3 | |
| | Mo | V | Mo | V | Mo | V |
|---|---|---|---|---|---|---|
| 0,37 | <0.05 | <0.05 | - | - | - | - |
| 0,75 | <0.05 | <0.05 | - | - | - | - |
| 1,12 | 5.36 | 0.35 | - | - | - | - |
| 1,5 | 40.84 | 3.42 | - | - | - | - |
| 1,87 | 40.24 | 3.46 | - | - | - | - |
| 2,25 | 44.16 | 3.76 | <0.05 | <0.05 | - | - |
| 2,62 | 45.19 | 3.88 | 1.29 | <0.05 | - | - |
| 3 | - | - | 35.96 | 2.89 | - | - |
| 3,37 | - | - | 44.63 | 3.67 | <0.05 | <0.05 |
| 3,75 | - | - | 45.37 | 3.64 | 0.11 | <0.05 |
| 4,12 | - | - | - | - | 2.79 | <0.05 |
| 4,5 | - | - | - | - | 18.08 | 0.93 |
| 4,87 | - | - | - | - | 38.31 | 3.24 |
| 5,12 | - | - | - | - | 36.61 | 2.99 |

Adsorption totale :

    - Mo : 99,9 kg/m³ de résine - V : 10,9 kg/m³ de résine

ELUTION EN COLONNE

(1ère étape, élution du vanadium en milieu acide)

Charge :

    - 99,9 kg/ m³ Mo et 10,9 kg/m³ V

Volume :

    - 20 ml

Température :

    - 55 °C

Solution éluante :

    - mélange $SO_2$ 4 % et $H_2SO_4$ 33,3 g/l
    - débit : 20 ml/h

TABLEAU DES RESULTATS

| VOLUME D'ELUTION (ml) | pH | RENDEMENTS D'ELUTION (%) | | RENDEMENTS CUMULES (%) | |
|---|---|---|---|---|---|
| | | Mo | V | Mo | V |
| 21 | 1,09 | 0,18 | 41,31 | 0,18 | 41,31 |
| 20 | 1,07 | 0,23 | 53,13 | 0,41 | 94,44 |
| 20 | 0,80 | 0,51 | 3,13 | 0,92 | 97,57 |
| 25 | 0,79 | 0,40 | 1,75 | 1,32 | 99,32 |

ELUTION EN COLONNE

(2ème étape, élution du molybdène en milieu basique)

Volume :

- 16 ml

Solution éluante :

- solution ammonicale 70 g/l $NH_4OH$
- pH : 12,35
- débit : 20 ml/heure

TABLEAU DES RESULTATS

| Volume d'élution (ml) | pH | RENDEMENTS D'ELUTION (%) Mo | RENDEMENTS CUMULES (%) Mo |
|---|---|---|---|
| 22 | 8,53 | 46,67 | 46,67 |
| 20 | 9,84 | 50,02 | 96,69 |
| 20 | 11,3 | 2,18 | 98,87 |
| 20 | 11,9 | 0,29 | 99,16 |
| 20 | 12,0 | 0,15 | 99,31 |
| 20 | 12,1 | 0,09 | 99,40 |
| 20 | 12,1 | <0.06 | 99,46 |
| 22 | 12,0 | 0,1 | 99,56 |

**Revendications**

1.  Procédé de traitement d'un catalyseur usé, renfermant notamment du molybdène et du vanadium en vue de récupérer à l'état sensiblement pur ledit molybdène et ledit vanadium, procédé comprenant facultativement les étapes conventionelles de récupération des autres ingrédients dudit catalyseur, le procédé comportant plus particulièrement une séquence d'étapes spécifiquement adaptées à la récupération du molybdène et du vanadium, ledit procédé consistant ainsi à :
    a) soumettre la masse catalytique à une lixiviation alcaline en vue de dissoudre notamment les molybdate et les vanadate, ladite lixiviation étant suivie généralement d'un lavage à l'eau,
    b) amener le pH de la solution obtenue à une valeur d'environ 7 et traiter la solution par un acide en vue d'éliminer par précipitation l'alumine qu'elle renferme ainsi qu'éventuellement l'arsenic qu'elle renferme,

le procédé étant alors caractérisé en ce que :

c) on porte la solution purifiée qui contient du molybdène et du vanadium à pH d'environ 4 à 5,5 et

d) on procède à une adsorption de cette solution sur une résine échangeuse d'ions,

e) on procède à une élution en deux étapes, la première étape étant effectuée en milieu acide et réducteur, élution au cours de laquelle on récupère du vanadium sensiblement pur, la deuxième étape étant effectuée en milieu basique, élution au cours de laquelle on récupère du molybdène sensiblement pur.

2.  Procédé selon la revendication 1 dans lequel au cours de la lixiviation effectuée en milieu alcalin, la température est comprise entre 50 et 100°C, en continu et à contre-courant dans une série d'au moins deux bacs, par percolation.

3.  Procédé selon la revendication 2 dans lequel on utilise trois à quinze bacs en série.

4.  Procédé selon l'une des revendications 1 à 3 dans lequel au cours de l'étape (b) l'acide est l'acide sulfurique.

5.  Procédé selon l'une des revendications 1 à 4 dans lequel l'agent réducteur utilisé lors de l'étape (e) est du dioxyde de soufre ou de l'hydrazine.

6.  Procédé selon l'une des revendications 1 à 5 dans lequel à l'étape (e), la deuxième étape d'élution est conduite en présence d'ammoniaque ou de soude.

Office européen
des brevets

**RAPPORT DE RECHERCHE EUROPEENNE**

Numero de la demande

EP    93 40 0222

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | DE-A-3 005 163 (HERMANN C. STARCK)<br>* le document en entier *<br>--- | 1,2,4-6 | C22B3/00<br>C22B3/12<br>C22B3/24 |
| A | DE-A-2 021 630 (W. C. HERAEUS GMBH)<br>* le document en entier *<br>--- | 1,6 | C22B3/26<br>B01D11/02<br>B01J23/92 |
| Y | Derwent Publications Ltd., London, GB;<br>AN 80-83588C<br>& JP-A-55 130 822 (SHINKU KAGAKU KOGYO)<br>* abrégé *<br>--- | 1,2,4-6 | //C22B34:34<br>C22B34:22 |
| Y | US-A-4 145 397 (SHIGEO TOIDA ET AL.)<br>*ABRÉGÉ;COLONNE 1,LIGNES 13 - 59;COLONNE 2,LIGNES 13-63;COLONNE 3,LIGNES 39-47;COLONNE 4,LIGNES 8-47<br><br>----- | 1,2,4-6 | |

**DOMAINES TECHNIQUES RECHERCHES (Int. Cl.5)**

C22B
B01D
B01J

Le présent rapport a été établi pour toutes les revendications

| Lieu de la recherche | Date d'achèvement de la recherche | Examinateur |
|---|---|---|
| LA HAYE | 12 MARS 1993 | |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)